# DEMANDE DE BREVET EUROPEEN

(11) **EP 0 607 097 A1**
(43) Date de publication de la demande: **20.07.1994**
(21) Numéro de dépôt: 94420008.8
(22) Date de dépôt: 11.01.1994
(51) Int. Cl.: G01N 7/14

(54) **Procédé de détection de la présence d'un liquide à l'intérieur d'une capsule remplie d'une poudre métallique**

(30) Priorité: 12.01.1993 FR 9300421
(71) Demandeur: VALINOX, F-92100 Boulogne-Billancourt (FR)
(72) Inventeur: Aslund, Christer, S-64436 Torshalla (SE); Dekmeer, Patrice, F-56680 Bruay-sur-Escaut (FR)
(74) Mandataire: Desolneux, Jean-Paul Charles

(57) **Abrégé**

La méthode permet la détection de petites quantités de liquide dans une capsule contenant une poudre métallique ou un mélange de poudres métalliques et céramiques.

Cette méthode consiste à percer un trou 4 à travers la paroi de la capsule 1 puis à abaisser la pression dans la capsule au-dessous de la tension de vapeur du liquide à la température de la capsule puis à isoler celle-ci par une vanne 10 du moyen de pompage. On contrôle la remontée de pression par une jauge à vide 11.

## Description

L'invention est relative à un procédé de détection de la présence de liquide à l'intérieur d'une capsule remplie d'une ou plusieurs poudres métalliques ou d'un mélange d'au moins une poudre métallique avec au moins une poudre céramique. Elle s'applique en particulier à la détection de liquide ayant pénétré dans les capsules soit lors de leur compression isostatique à froid à l'aide dudit liquide, soit en toute autre occasion.

On connaît différents procédés de réalisation de pièces métalliques à partir de poudres faisant appel à une compression de ces poudres suivie d'un frittage.

On connaît, en particulier, le procédé suivant lequel une poudre métallique ou un mélange de poudres métalliques alliées ou non alliées est soumis à une compression isostatique à froid puis consolidé par frittage à température convenable. De façon avantageuse, cette consolidation peut être combinée avec une transformation à chaud, par exemple par extrusion.

Ainsi le brevet FR 2267847 décrit un procédé de fabrication de tubes, barres ou articles similaires dans lequel on met en oeuvre une poudre métallique ou un mélange de poudres métalliques et céramiques qu'on loge dans une capsule métallique à parois minces, fermée ensuite de façon étanche, puis qu'on soumet à une compression isostatique à froid afin d'atteindre une densité d'au moins 80 % de la densité théorique. Cette capsule et son contenu sont ensuite chauffés à température convenable, puis subissent une extrusion permettant d'obtenir des articles ayant 100 % de la densité théorique et ayant une forme et des propriétés physiques et chimiques homogènes.

Le brevet EP 0020536 décrit un perfectionnement du procédé selon le brevet FR 2267847. Selon ce brevet EP, au moins l'enveloppe extérieure de la capsule comporte, à partir de chacune des deux extrémités, un évasement dirigé vers l'extérieur pour compenser la contraction qui se produit au cours de la compression isostatique, cet évasement étant calculé de façon à être éliminé après cette compression isostatique. On obtient ainsi une ébauche qui peut être parfaitement cylindrique et permettre une extrusion à chaud dans de bonnes conditions.

D'autres méthodes de transformation à chaud peuvent aussi être envisagées.

Dans tous ces cas, on constate que la capsule qui contient la poudre métallique peut n'être pas étanche el/ou se fissurer au cours de la compression isostatique à froid. En effet, cette capsule à parois minces est alors soumise à une importante déformation plastique et, de plus, elle subit des contraintes très importantes dans les zones de liaison soudées en particulier dans les zones de liaison par soudage des extrémités de ses parois longitudinales avec les pièces de relativement forte épaisseur qui la ferment aux deux bouts. Ces zones de liaison sont,par exemple, représentées dans le brevet EP cité plus haut aux figures 1 à 4.

Pour permettre de détecter ce manque d'étanchéité et/ou ces fissures, souvent très fines, il a été proposé d'introduire dans la capsule, avant compactage de la poudre métallique, du néon ou de l'hélium ou de l'hydrogène, en mélange par exemple avec de l'azote, comme indiqué dans les brevets DE 3115095 et US 4965043. Après compactage isostatique à froid, on effectue un essai d'étanchéité en mettant les capsules compactées dans une enceinte sous vide reliée à un moyen de pompage et en détectant la présence de néon ou d'hélium ou d'hydrogène par un moyen de détection convenable tel qu'un spectromètre de masse.

Dans le cas de l'utilisation d'hélium ou d'hydrogène, les pièces obtenues ensuite par consolidation et travail à chaud contiennent de petites quantités d'hélium à l'état occlus qui fragilisent le métal.

Par ces méthodes, ce n'est pas la présence d'un liquide hydraulique qu'on détecte et on n'est pas certain, après compactage, de détecter toutes les fissures souvent très fines à travers lesquelles ont pu passer de petites quantités d'un fluide hydraulique, tel que par exemple, de l'eau, pendant le compactage isostatique à très haute pression.

En effet, l'eau peut traverser à très haute pression des pores de l'ordre de un ou quelques micromètres que ne traverse pas le néon, l'hélium ou l'hydrogène à des pressions de l'ordre de 1 bar ou, au maximum, quelques bars. Ces petites quantités de liquide hydraulique tel que de l'eau qui ont pu s'introduire dans la capsule se vaporiseront rapidement pendant le préchauffage de la capsule avant travail à chaud ; la vapeur ne pourra s'échapper que très lentement à travers les micro-fissures et montera en pression jusqu'à éclatement de la capsule. ll se peut d'ailleurs aussi que les micro-fissures soient obturées de l'intérieur par des grains de poudre ou des agglomerats de poudres venant se plaquer contre lesdites micro-fissures. Les risques de montée en pression de la capsule s'en trouvent accrus.

Ainsi, dans le cas d'une entrée d'eau dans une capsule de, par exemple 150 mm de diamètre et 1,8 mm d'épaisseur, on peut observer un tel éclatement pour une pression interne de vapeur d'environ 40 bars qui est rapidement atteinte au cours du préchauffage de la capsule en vue de son travail à chaud.

On a donc recherché la possibilité de détecter la présence de très petites quantités d'un fluide hydraulique, tel qu'en particulier de l'eau, à l'intérieur d'une capsule remplie d'une poudre métallique notamment après que celle-ci a subi un compactage isostatique à froid. On a recherché aussi la possibilité d'évaluer, de façon approximative, l'importance des fissures ou zones non étanches de la paroi de la capsule qui ont été traversées par le liquide hydraulique afin de pouvoir remédier plus facilement à cette pénétration en particulier quand il s'agit d'eau.

On a recherché enfin à mettre au point une méthode de détection de la présence éventuelle d'un liquide tel qu'un liquide hydraulique à l'intérieur de capsules remplies de poudre métallique notamment après compactage isostatique à froid, méthode d'une mise en oeuvre facile, relativement rapide et présentant une grande sûreté de détection.

La méthode qui fait l'objet de l'invention permet la détection sûre de la présence de très petites quantités d'un fluide hydraulique, liquide à température ambiante, ayant pénétré à l'intérieur d'une capsule contenant au moins une poudre métallique ou un mélange d'au moins une poudre métallique avec au moins une poudre céramique pendant la phase de compression isostatique à froid, par exemple à travers des micro-fissures inférieures ou égales à environ 5 micromètres. Cette méthode s'applique en particulier au cas où la pression de compactage hydrostatique transmise par le liquide hydraulique aux parois de la capsule est supérieure à 500 bars et peut atteindre une valeur de 4500 à 6000 bars ou même davantage.

La méthode permet aussi la détection sûre de la présence de très petites quantités d'un liquide se trouvant à l'intérieur d'une capsule contenant au moins une poudre métallique ou un mélange d'au moins une poudre métallique avec au moins une poudre céramique, même si ce liquide n'a pas élé introduit par compression isostatique à froid mais se trouvait inclus, quelle qu'en soit la raison, à l'intérieur de la capsule.

Bien que de nombreux liquides soient utilisables comme liquides hydrauliques, en particulier divers composés hydrocarbonés, le liquide le plus communément utilisé est l'eau additionnée ou non d'un lubrifiant tel que de l'huile ou d'un produit antirouille. Cette eau présente notamment l'avantage de ne pas réagir de façon rapide à température ambiante avec de nombreuses poudres métalliques et de pouvoir être séparée de ces poudres de façon relativement facile.

La méthode suivant l'invention est mise en oeuvre sur une capsule fermée contenant au moins une poudre métallique ou un mélange d'au moins une poudre métallique avec au moins une poudre céramique qui vient ou non de subir une compression isostatique à froid par l'intermédiaire d'un liquide hydraulique. On perce la paroi de cette capsule d'un trou dont on relie l'orifice de façon étanche à un moyen de pompage. On abaisse la pression à l'intérieur de la capsule, au moins dans une zone proche du trou, à une valeur inférieure à la tension de vapeur du liquide contenu dans la capsule à la température de la capsule. On isole ensuite la capsule du moyen de pompage et on observe la remontée de la pression à l'intérieur de la capsule en fonction du temps au moyen d'un moyen de mesure de pression tel qu'une jauge à vide. On détecte la présence éventuelle de liquide à l'intérieur de la capsule par un ralentissement de la remontée de la pression en fonction du temps, ralentissement qui se produit lorsque la valeur de la pression mesurée par le moyen de mesure de pression s'approche de la tension de vapeur du liquide à la température de la capsule.

Dans le cas où la capsule contenant une petite quantité de liquide est pratiquement étanche à l'air à la pression atmosphérique, le ralentissement de la remontée de pression est prolongé par un palier pour une pression sensiblement égale à la tension de vapeur du liquide contenu dans la capsule à la température de la capsule. Le niveau de pression de ce palier varie en fonction de la composition des poudres métalliques et céramiques à cause des phénomènes d'adsorption désorption dont l'incidence varie également suivant les liquides mis en oeuvre.

Dans le cas où la capsule ne contient pas de liquide et est étanche à l'air à la pression atmosphérique, on n'observe qu'une remontée de pression très lente à vitesse sensiblement constante et, si les liaisons sont étanches, on n'atteint pas la tension de vapeur du liquide.

Dans le cas où, au contraire, la capsule n'est pas étanche à l'air, on observe une remontée de pression plus rapide que dans celui où seul le liquide a pénétré ou se trouvait dans la capsule. La courbe de remontée de la pression en fonction du temps peut ne pas comporter de ralentissement visible au voisinage de la valeur qui correspond à la tension de vapeur du liquide à la température de la capsule, en particulier si la remontée de pression au-delà de ce niveau est d'environ 5 millibars par minute ou davantage. On peut alors essayer de détecter la fuite correspondante, relativement importante, par un moyen connu tel que le ressuage, ou la détection par eau savonneuse après mise en pression de la capsule ou encore un test à l'hélium ou à l'hydrogène comme indiqué plus haut. Une fois la fuite repérée et obturée, par exemple par soudage, on pourra appliquer à nouveau la méthode suivant l'invention pour détecter la présence de liquide dans la capsule.

Le liquide le plus fréquent à détecter est de l'eau, que celle-ci provienne du fluide hydraulique ou du remplissage initial de la capsule. Les poudres métalliques mises en oeuvre sont, à titre d'exemple, constituées par des aciers inoxydables ou réfractaires ou d'autres alliages inoxydables ou réfractaires.

Dans le cas de la détection de l'eau à l'intérieur de la capsule, il suffit d'abaisser la pression à l'intérieur de la capsule, ou dans une zone proche du trou qui a été percé à travers sa paroi, à une valeur pas sensiblement supérieure à environ 5 millibars, lorsque la température de la capsule est d'environ 15° à 20° Celsius ou davantage, avant d'isoler la capsule du moyen de pompage.

La poudre métallique contenue dans la capsule peut être composée d'un mélange de poudres métalliques de métaux ou d'alliages de compositions différentes. Dans le cas de mélanges de poudres métalliques et céramiques, les céramiques peuvent être constituées, par exemple, d'oxydes ou de nitrures ou de tout composé ayant le caractère de céramique. Le pourcentage en volume de céramiques dans le mélange peut atteindre 50 % du volume total à l'état non tassé.

De préférence, dans le cas où la capsule a une forme sensiblement cylindrique, on perce le trou à travers l'une des deux pièces d'extrémité de relativement forte épaisseur. Une canalisation raccorde de façon étanche le trou ainsi réalisé au moyen de pompage et il exista un moyen permettant d'isoler la capsule du moyen de pompage. Ce moyen est, par exemple, une vanne d'arrêt montée sur la canalisation.

Un moyen de mesure de pression tel qu'une jauge de mesure du vide placée de préférence au voisinage de l'orifice du trou de la capsule permet la mesure de la pression aussi bien pendant la période de pompage que pendant celle où la capsule est isolée du moyen de pompage.

De préférence, dans le cas où la capsule est remplie d'air ou d'un gaz particulier ou d'un mélange de gaz sensiblement à la pression atmosphérique avant compression isostatique à froid, on détecte, après la phase de compression isostatique, au moment du perçage de la capsule, la sortie d'un flux gazeux, en surpression, celle-ci résultant de la compression réalisée. L'absence de surpression généralement est l'indication d'une fissure relativement importante par laquelle s'est déjà échappé l'excès de gaz.

De façon courante, on applique la méthode de détection suivant l'invention à des capsules cylindriques métalliques pleines ou tubulaires. A titre d'exemple, leur diamètre extérieur peut, de façon non limitative, varier de 120 à 400 mm et leur longueur de 500 à 1500 mm.

On utilise avantageusement comme moyen de pompage par exemple des pompes à palettes ou à piston rotatif ayant un débit de l'ordre de 10 m³ par heure à la pression d'environ 5 millibars.

Chaque fois que la méthode suivant l'invention permet de délecter la présence d'eau à l'intérieur de la capsule, une méthode simple permet d'éliminer cette eau. Il suffit de chauffer la capsule ayant son trou débouché dans une enceinte chauffée à température telle que la température à l'intérieur de la capsule soit de l'ordre de 50 à 100° C, en aspirant de préférence la vapeur d'eau contenue dans la capsule pour accélérer son départ.

Dans tous les cas où il apparaît que l'eau a pénétré seulement par des microfissures, la capsule étant étanche à l'air à la pression atmosphérique, il suffit après avoir éliminé l'eau, par exemple comme expliqué ci-dessus, de boucher le trou percé à l'une des extrémités de la capsule, de façon étanche et d'effectuer ensuite le préchauffage à la température voulue pour le frittage qui pourra être suivi d'une transformation à chaud par exemple par extrusion ou encore par d'autres méthodes telles que le forgeage ou le laminage.

Les exemples et les figures schématiques ci-après décrivent de façon non limitative des modes de mise en oeuvre de la méthode de détection qui fait l'objet de l'invention.

La figure 1 représente de façon schématique un mode de raccordement d'un moyen de pompage et d'un moyen de mesure du vide à l'orifice du trou percé à travers la paroi d'une capsule pour la mise en oeuvre de la méthode qui fait l'objet de l'invention.

La figure 2 représente des courbes de pompage et de remontée de pression obtenues au cours de la mise en oeuvre de la méthode qui fait l'objet de l'invention.

### Exemple 1 -

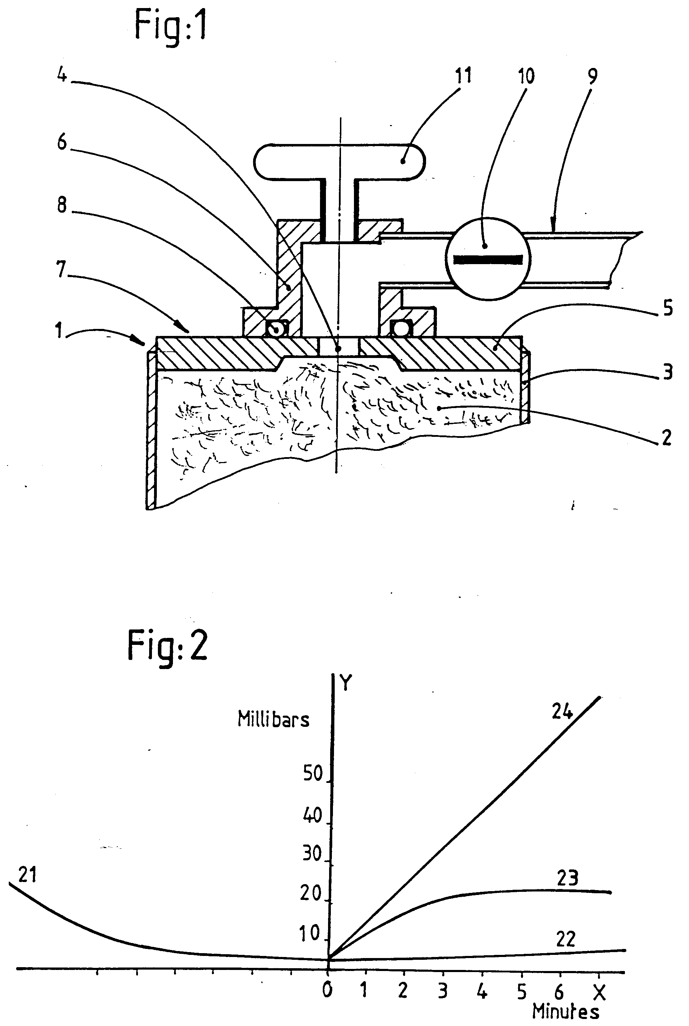

On applique la méthode qui fait l'objet de l'invention à une capsule 1 (voir figure 1) qui a subi un compactage isostatique à froid en utilisant de l'eau comme fluide hydraulique jusqu'à une pression d'environ 4500 bars. Cette capsule contient une poudre 2 d'un acier inoxydable pulvérisé sous courant d'argon ou d'azote, les granules de métal étant généralement de forme arrondie, dont la densité après compactage atteint 85 % de la densité théorique. L'enveloppe 3 de la capsule est en métal de 2,0 mm d'épaisseur et a une forme cylindrique et mesure environ 120 mm de diamètre et 600 mm de long. La température moyenne du contenu 2 de la capsule 1 est d'environ 20° Celsius.
On effectue le perçage d'un trou 4 d'environ 10 mm de diamètre à travers le disque de métal d'extrémité 5. On constate à l'ouverture du trou 4 la sortie d'un flux gazeux qui était en surpression à l'intérieur de la capsule. Il s'agit d'air qui était, avant compactage, à la pression atmosphérique. On place au-dessus du trou 4 une pièce de raccordement 6 qui fait joint étanche avec la surface plane 7 du disque d'extrémité 5 grâce à un joint torique 8.

La pièce 6 est maintenue contre la surface 7 par dépression. On peut aussi en variante, utiliser un moyen d'appui pour la maintenir.

Un moyen de pompage, non représenté, d'un débit d'environ 10 m³ par heure, à la pression de 5 millibars, est relié par une canalisation 9 à la pièce de raccordement 6. Une vanne 10 permet d'isoler la capsule 1 du moyen de pompage et une jauge à vide 11 est montée directement sur la pièce de raccordement 6.
Cette jauge d'un type connu de l'homme de métier a une bonne sensibilité dans le domaine de 1 à 100 millibars et peut être, par exemple, une jauge de Pirani.

La courbe 21 (voir figure 2) montre la baisse de pression en millibars en fin de pompage à l'intérieur de la capsule 1 en fonction du temps.
Après quinze à vingt minutes, on atteint au point 0 une pression résiduelle d'environ 5 millibars indiquée par la jauge 11. On isole alors la capsule 1 du moyen de pompage, par fermeture de la vanne 10 et on observe la remontée de pression en fonction du temps qui est représentée par la courbe 22.
On voit que cette pression n'augmente que très lentement et ne dépasse pas, au bout d'environ 7 minutes, une valeur d'environ 8 millibars. Cette constatation permet d'affirmer qu'il n'y a pas d'eau à l'état liquide dans la capsule

En effet, à la température de 20° Celsius, la tension de vapeur de l'eau est d'environ 23 millibars. Bien que la résistance à la diffusion des gaz ou vapeurs de la masse de poudre compactée 2 à 85 % soit grande, l'expérience a montré qu'au bout de quelques minutes, en présence d'eau à une extrémité d'une capsule telle que la capsule 1, la tension de vapeur observée à l'autre extrémité, où on vient de faire le pompage, n'est pas inférieure de plus de 2 à 6 millibars à la tension de vapeur qui serait mesurée à la première extrémité en présence d'eau. Ces écarts dépendent bien sûr du taux de compactage, des caractéristiques de finesse de la poudre, de la section et de la longueur de la capsule mais montrent qu'au bout de 6 à 10 minutes l'existence d'eau liquide peut être constatée de façon sûre à condition qu'elle ne soit pas masquée par une entrée d'air importante.

### Exemple 2 -

On applique la méthode suivant l'invention à une capsule de même conception que celle de l'exemple 1 contenant une même poudre métallique soumise à une compression isostatique à froid avec de l'eau comme fluide hydraulique jusqu'à une pression de 4500 bars.

Après compression, la capsule a une forme cylindrique et mesure environ 220 mm de diamètre et 1070 mm de long. On perce un trou de 10 mm de diamètre à une extrémité et, comme dans le cas du premier exemple, on observe un flux gazeux dirigé vers l'extérieur montrant l'absence de fuites importantes.

Après avoir établi une liaison avec un moyen de pompage par des moyens identiques à ceux de la figure 1, on effectue un pompage d'environ 35 à 40 mn qui permet d'atteindre une pression résiduelle d'environ 5 millibars.

Après avoir isolé la capsule du moyen de pompage, on observe une remontée de pression analogue à celle de l'exemple 1 représentée par la courbe 22 de la figure 2. On en conclut que dans ce cas-ci également, la capsule ne contient pas d'eau liquide.

### Exemple 3 -

On applique à nouveau la méthode à une capsule de dimensions identiques à celle de l'exemple 1 et contenant une même poudre métallique.

Après compression à 4500 bars, le perçage d'un trou de 10 mm à une extrémité entraîne le dégagement d'un flux gazeux qui montre l'absence de fuites d'air importantes. Un pompage d'une durée d'environ 15 à 20 mn permet d'abaisser la pression dans la capsule au voisinage du trou à environ 5 millibars.

Après fermeture de la vanne d'isolation 10 (voir figure 1) on constate une remontée de la pression résiduelle dans la capsule beaucoup plus rapide que dans le cas de l'exemple 1. Cette remontée correspond à la courbe 23 de la figure 2 qui comporte un accroissement initial relativement rapide de la pression, suivi d'un ralentissement progressif avec établissement d'un palier, ou d'une croissance très lente de la pression vers 23 à 25 millibars environ, c'est-à-dire au voisinage de la tension de vapeur de l'eau à environ 20-21° Celsius.
On remarque que, malgré la pénétration de l'eau à travers des microfissures de la capsule, la très lente remontée de pression confirme que les microfissures ayant permis le passage de petites quantités d'eau à très haute pression, sont pratiquement étanches vis-à-vis de l'air à la pression d'environ 1 bar. Ces fissures sont également étanches vis-à-vis de la pression intérieure lors du chauffage de la capsule et de la mise en pression de l'eau qui est contenue.

### Exemple 4 -

Un dernier essai est effectué sur une capsule ayant les mêmes dimensions que celle de l'exemple 2, contenant la même poudre métallique et ayant subi la même compression isostatique à froid avec de l'eau comme fluide hydraulique à une pression maximale de 4500 bars. Le perçage du trou de 10 mm de diamètre à travers l'un des disques d'extrémité de la capsule laisse passage à un flux gazeux se dégageant à l'extérieur comme dans les cas précédents.

Un pompage d'environ 35 à 40 mn permet d'atteindre une pression résiduelle d'environ 5 millibars. L'isolation de la capsule du moyen de pompage par fermeture de la vanne d'arrêt 10 entraîne une remontée rapide de la pression à l'intérieur de la capsule comme le montre la courbe 24.

On voit que la pente de cette courbe 24, plus forte que celle de la courbe 23, ne permet pas de détecter la présence d'eau qui est cependant très probable. Dans ce cas, l'importance de la fuite montre qu'il n'y a pas étanchéité à l'air, et donc que la fuite est sûrement détectable par mise en pression de la capsule à quelques bars et détection à l'extérieur par de l'eau savonneuse ou encore par ressuage.

Dans certains cas, on peut aussi utiliser une méthode plus sensible utilisant l'hélium ou l'hydrogène détectés par spectrométrie de masse.

Une fois la ou les fissures détectées et obturées, il sera possible de rechercher à nouveau la présence d'eau par la méthode suivant l'invention.

Dans les cas où la méthode de détection suivant l'invention permet de détecter la présence d'eau, c'est-à-dire le cas de l'exemple 3 et aussi celui de l'exemple 4 mais après obturation du passage d'air, on peut, par une méthode simple, éliminer les petites quantités d'eau introduites.

Il suffit par exemple pour cela, de traiter les capsules défectueuses dans une enceinte maintenue sous une pression résiduelle de quelques millibars, par exemple 5 à 10 millibars. Ces capsules doivent conserver le trou d'environ 10 mm de diamètre ouvert et on élève la température de l'enceinte vers 60 à 100° Celsius.

Plusieurs heures sont nécessaires pour porter la masse compactée interne dans la capsule à la température voulue et évacuer l'eau. Un nouvel essai de détection après refroidissement de la capsule à la température ambiante peut être effectué pour vérifier l'élimination complète de l'eau.

Comme indiqué dans la description générale, on peut utiliser comme liquide hydraulique, au lieu d'eau pure, de l'eau contenant différents additifs jouant le rôle de lubrifiants ou d'anti-rouille. Il est préférable de limiter la teneur de ces additifs afin de limiter les risques de contamination de la poudre métallique en cas de pénétration du mélange liquide dans la charge à travers les fissures de la capsule. On peut utiliser aussi, à la place d'eau, d'autres liquides qu'on choisira par exemple notamment en tenant compte de leur compatibilité avec la poudre à compacter en cas de pénétration dans la capsule, de leur tension de vapeur à température proche de l'ambiante et enfin de leur possibilité d'élimination par chauffage à une température maximale ne dépassant pas environ 100°C.

De très nombreuses modifications ou adaptations peuvent être apportées à la méthode de détection décrite qui ne sortent pas du domaine de l'invention.

## Revendications

**1)** Méthode de détection de la présence d'un liquide à l'intérieur d'une capsule (1) fermée, contenant au moins une poudre métallique ou un mélange d'au moins une poudre métallique avec au moins une poudre céramique, lequel liquide a une tension de vapeur inférieure à la pression atmosphérique à température ambiante, caractérisée en ce qu'on perce la paroi de la capsule (1) d'un trou (4) dont on relie l'orifice à un moyen de pompage avec lequel on abaisse la pression à l'intérieur de la capsule au-dessous de la tension de vapeur du liquide puis on isole la capsule du moyen de pompage et on observe la remontée de pression à l'intérieur de la capsule au moyen d'un moyen de mesure de pression (11) et on détecte la présence du liquide hydraulique par un ralentissement de la vitesse de remontée de la pression (23) lorsque cette pression s'approche de la tension de vapeur du liquide hydraulique à la température de la capsule.

**2)** Méthode suivant la revendication 1 caractérisée en ce que la capsule a subi une compression isostatique à froid à l'aide d'un liquide hydraulique.

**3)** Méthode suivant la revendication 2 caractérisée en ce que la compression isostatique à froid a été effectuée à une pression supérieure à 500 bars.

**4)** Méthode suivant la revendication 2 caractérisée en ce que le liquide a pénétré à l'intérieur de la capsule au cours de l'opération de compression isostatique à froid.

**5)** Méthode suivant la revendication 1 caractérisée en ce que le liquide a été enfermé dans la capsule lors du remplissage de celle-ci.

**6)** Méthode de détection suivant l'une des revendications 1 à 5 caractérisée en ce que lorsque la vitesse de remontée de la pression (24) à l'intérieur de la capsule (1), après isolation de celle-ci du moyen de pompage, ne présente pas de ralentissement au voisinage de la pression correspondant à la tension de vapeur du liquide à la température de la capsule et a une vitesse au moins égale à 5 millibars par minute, on effectue une recherche de fuite à travers la paroi (3) de la capsule par une méthode connue et, après obturation de celle-ci, on met à nouveau en oeuvre la méthode de détection suivant revendication 1.

**7)** Méthode de détection suivant l'une des revendications 1 à 6 caractérisée en ce que le liquide est de l'eau.

**8)** Méthode de détection suivant revendication 7 caractérisée en ce qu'on abaisse la pression dans la capsule (1) au voisinage de 5 millibars lorsque la température de la capsule est d'au moins environ 15° Celsius.

**9)** Méthode de détection suivant l'une des revendications 1 à 8 caractérisée en ce que lorsque la capsule (1) est sensiblement cylindrique et comporte des parois d'extrémité (5) de plus forte épaisseur, on perce le trou (4) qui sera relié au moyen de pompage à travers l'une de ces parois d'extrémité (5).

**10)** Méthode suivant l'une des revendications 7 ou 8 caractérisée en ce que lorsqu'on détecte la présence d'eau à l'intérieur d'une capsule (1) on élimine celle-ci par chauffage de la capsule, ayant son trou (4) ouvert, dans une enceinte sous vide jusqu'à obtention d'une température à coeur d'au moins 60° Celsius et pendant le temps nécessaire pour l'élimination de l'eau.

**11)** Méthode suivant l'une des revendications 1 à 10 caractérisée en ce que, avant chauffage de la capsule (1) à température de frittage, on obture le trou (4) réalisé pour permettre le pompage.

**12)** Méthode suivant l'une des revendications 1 à 11 caractérisée en ce que la poudre métallique appartient au groupe comprenant les aciers inoxydables ou réfractaires et les autres alliages inoxydables ou réfractaires.

**13)** Méthode suivant la revendication 12 caractérisée en ce que la poudre est obtenue par pulvérisation sous courant gazeux tel qu'un courant d'argon ou d'azote.

**14)** Méthode suivant l'une des revendications 1 à 13 caractérisée en ce que le pourcentage en volume de la poudre céramique dans le mélange de poudres métalliques et céramiques peut atteindre 50 % du volume total à l'état non tassé.
